# EUROPÄISCHE PATENTANMELDUNG

(11) **EP 3 715 675 A1**
(43) Veröffentlichungstag der Anmeldung: **30.09.2020**
(21) Anmeldenummer: 20164883.9
(22) Anmeldetag: 23.03.2020
(51) Int. Cl.: F16H 55/22, F16H 1/12, F16H 57/038, B23F 19/00, F16H 55/08, F16H 55/17

(54) **SERVOGETRIEBE, SERVOSTELLEINHEIT MIT EINEM SERVOGETRIEBE UND VERFAHREN ZUM HERSTELLEN EINES SERVOGETRIEBES**

(30) Priorität: 27.03.2019 DE 102019107899
(71) Anmelder: Welter Zahnrad GmbH, 77933 Lahr (DE)
(72) Erfinder: GÜNES, Ökkes, 79206 Breisach (DE); KLUGE, Ingo, 75203 Königsbach-Stein (DE)

(57) **Zusammenfassung**

Ein Servogetriebe (103) ist mit einem Kronenradgetriebe ausgebildet, das ein Stirnritzel (227) und ein Kronenrad (251) mit vorzugsweise doppelt bullig ausgebildeten Kronenradzähnen aufweist. Beim Herstellen der Servogetriebes (103) wird das Kronenrad (251) zuerst gehärtet, und nach dem Härten werden die Kronenradzähne geschliffen. Dadurch ergibt sich für das Servogetriebe (103) aufgrund des Fehlens höherer axialer Kräfte auch bei einem Ausführen mit einem Leichtmetallwerkstoff für ein Getriebegehäuse (106) eine verhältnismäßig hohe Torsionssteifigkeit.

## Beschreibung

Die Erfindung betrifft ein Servogetriebe gemäß dem Oberbegriff des Anspruchs 1.

Die Erfindung betrifft weiterhin eine Servostelleinheit mit einem Servogetriebe.

Die Erfindung betrifft weiterhin ein Verfahren zum Herstellen eines Servogetriebes.

Ein derartiges Servogetriebe sowie eine Servostelleinheit mit einem derartigen Servogetriebe und mit einem das Servogetriebe antreibenden Servoantriebsmotor sind aus DE 199 17 125 A1 bekannt. Dieses vorbekannte Servogetriebe verfügt über eine Antriebswelle und über ein Antriebsrad, das drehfest mit der Antriebswelle verbunden ist. Weiterhin ist es mit einer Abtriebswelle und mit einem Abtriebsrad ausgestattet, das drehfest mit der Abtriebswelle verbunden ist. Dabei sind das Antriebsrad und das Abtriebsrad kämmend miteinander in Eingriff, und die Antriebswelle sowie die Abtriebswelle sind winklig zueinander ausgerichtet. Das Antriebsrad und das Abtriebsrad weisen jeweils eine Hypoidgleasonverzahnung auf, die winklig zueinander ausgerichtet sind.

Aus DE 101 61 754 C1 ist ein Winkelgetriebe bekannt, bei dem ein Kronenrad als zwischen mehreren Ritzeln vermittelndes Zahnrad eingesetzt ist.

Aus DE 100 48 400 A1 ist eine Verzahnung mit konkav beziehungsweise konvex gekrümmten Seitenflanken bekannt, die bereichsweise korrespondierende Seitenflankenverläufe aufweisen.

Der Erfindung liegt die Aufgabe zugrunde, ein Servogetriebe der eingangs genannten Art sowie eine mit einem derartigen Servogetriebe ausgestattete Servostelleinheit anzugeben, die sich bei einem verhältnismäßig geringen Betriebsgeräusch durch eine sehr kompakte, relativ massearme sowie montagemäßig verhältnismäßig einfach zu montierende Bauform, ein relativ großes Übersetzungsverhältnis sowie eine hohe Stellgenauigkeit auszeichnen.

Der Erfindung liegt weiterhin die Aufgabe zugrunde, ein Verfahren zum präzisen und verhältnismäßig kostengünstigen Herstellen eines derartigen Servogetriebes anzugeben.

Die erstgenannte Aufgabe wird bei einem Servogetriebe der eingangs genannten Art erfindungsgemäß mit den kennzeichnenden Merkmalen des Anspruchs 1 gelöst.

Die erstgenannte Aufgabe wird bei einer Servostelleinheit gemäß Anspruch 12 durch das Ausstatten mit einem erfindungsgemäßen Servogetriebe mit den Merkmalen des Anspruchs 1 gelöst.

Die zweitgenannte Aufgabe wird bei einem Verfahren zum Herstellen eines erfindungsgemäßen Servogetriebes mit den Merkmalen des Anspruchs 13 gelöst.

Dadurch, dass bei dem erfindungsgemäßen Servogetriebe das Antriebsrad und das Abtriebsrad ein Kronenradgetriebe mit einem Stirnritzel und mit einem Kronenrad bilden, ergibt sich durch die in axialer Richtung der Antriebswelle verhältnismäßig unkritische Positioniergenauigkeit sowie die variable und insbesondere auch verhältnismäßig große Dimensionierbarkeit des Kronenrads bei gemäß dem erfindungsgemäßen Verfahren durchgeführter Fertigung bei einer hohen Stellgenauigkeit ein verhältnismäßig geringes Betriebsgeräusch sowie ein großes Übersetzungsverhältnis. Weiterhin ist das Kronenradgetriebe aufgrund der Kronenverzahnung im Vergleich zu Hypoidgetrieben gegenüber Temperatur- und Lasteinflüssen unempfindlicher sowie im Wirkungsgrad des Servogetriebes einschließlich der Lagerung höher.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispiels der Erfindung mit Bezug auf die Figuren der Zeichnung.

Es zeigen:
- Fig. 1: in einer perspektivischen Ansicht ein Ausführungsbeispiel eines Servogetriebes gemäß der Erfindung mit Blick auf eine Antriebswelle und eine Abtriebswelle, deren Achsen rechtwinklig zueinander ausgerichtet sind und in einer Mittenebene liegen,
- Fig. 2: in einer Schnittansicht das Ausführungsbeispiel gemäß Fig. 1 mit der Schnittebene in der Mittenebene, in der die Achsen der ein Stirnritzel tragenden Antriebswelle und der ein Kronenrad tragenden Abtriebswelle liegen,
- Fig. 3: in einer Schnittansicht das Ausführungsbeispiel gemäß Fig. 1 mit der Schnittebene rechtwinklig zu der Schnittebene gemäß Fig. 2, wobei die Schnittebene gemäß Fig. 3 in der Ebene der Achse der Antriebswelle und parallel zu dem Kronenrad liegt,
- Fig. 4: in einer Schnittansicht das Ausführungsbeispiel gemäß Fig. 1 mit der Schnittebene rechtwinklig zu der Schnittebene gemäß Fig. 2, wobei die Schnittebene gemäß Fig. 4 zwischen dem freien Ende des Stirnritzel und der Abtriebswelle liegt,
- Fig. 5: in einer Schnittansicht durch das Kronenrad rechtwinklig zu der Achse der Antriebswelle den kämmenden Eingriff des Stirnritzel und des Kronenrads,
- Fig. 6: in einer Schnittansicht einen Querschnitt eines Zahns des Kronenrads mit einer nicht maßstabsgerechten Darstellung der balligen Gestalt der Zähne des Kronenrads,
- Fig. 7: in einer Schnittansicht einen Querschnitt eines Zahns des Stirnritzels,
- Fig. 8: in einer ausschnittsweisen Draufsicht ein Kronenrad gemäß einem Ausführungsbeispiel der Erfindung,
- Fig. 9: eine Schnittansicht des Kronenrads gemäß Fig. 8 mit einer Schnittebene rechtwinklig zu dem Kronenrad,
- Fig. 10: eine Schnittansicht des Kronenrads gemäß Fig. 8 mit einer weiteren Schnittebene rechtwinklig zu dem Kronenrad,
- Fig. 11: in einer vergrößerten Schnittansicht in der Schnittebene gemäß Fig. 9 einen Zahn des Kronenrads,
- Fig. 12: in einer vergrößerten Schnittansicht in der Schnittebene gemäß Fig. 10 einen Zahn des Kronenrads,
- Fig. 13: in einer Stirnansicht eine Anzahl von Zähnen eines Kronenrads gemäß einem Ausführungsbeispiel der Erfindung,
- Fig. 14: in einer Schnittansicht in einer zu dem Kronenrad bei dem Ausführungsbeispiel gemäß Fig. 13 parallelen Schnittebene im Fußbereich und
- Fig. 15: in einer Schnittansicht in einer zu dem Kronenrad bei dem Ausführungsbeispiel gemäß Fig. 13 parallelen Schnittebene im Kopfbereich.

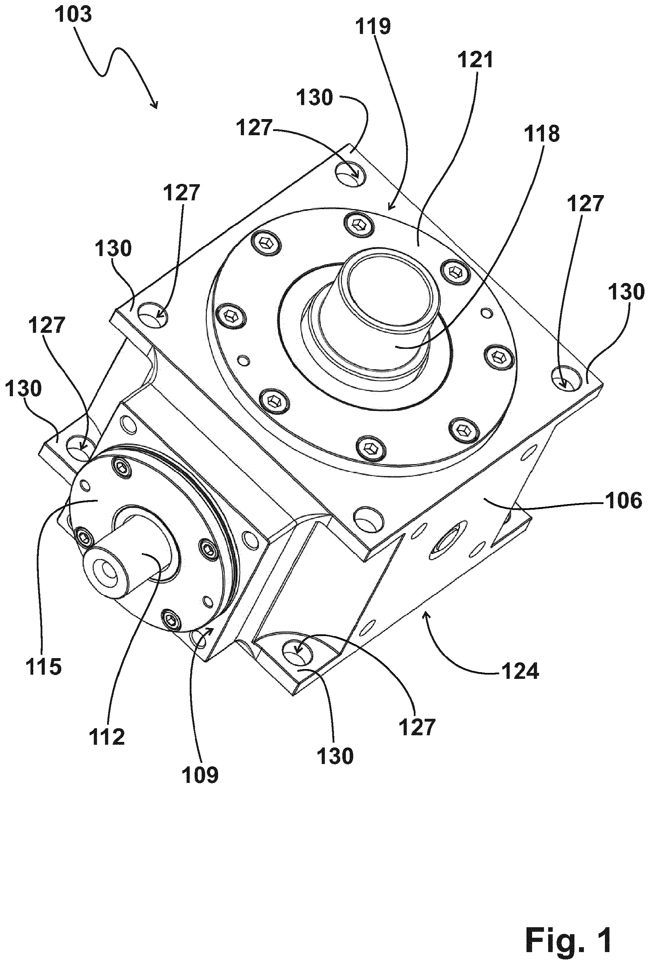

Fig. 1 zeigt in einer perspektivischen Ansicht ein Ausführungsbeispiel eines Servogetriebes 103 im Sinne eines aufgrund hoher Torsionssteifigkeit und geringem Verdrehspiel für hochdynamische Anwendungen eingerichtetes Getriebe gemäß der Erfindung, das ein würfelartig ausgebildetes Getriebegehäuse 106 aufweist. An einer Antriebsseite 109 verfügt das Servogetriebe 103 über eine insbesondere als Antriebswelle dienende Stirnritzelwelle 112, die mit einem Endabschnitt über das Getriebegehäuse 106 übersteht und durch einen mit dem Getriebegehäuse 106 verschraubten Stirnritzelwellenverschlussdeckel 115 durchgreift. Weiterhin ist das Servogetriebe 103 mit einer insbesondere als Abtriebswelle dienenden Kronenradwelle 118 ausgestattet, die bei dem Ausführungsbeispiel gemäß Fig. 1 rechtwinklig zu der Stirnritzelwelle 112 ausgerichtet ist. Dadurch ist der Getriebewinkel als Winkel zwischen der Antriebswelle und der Abtriebswelle hier 90 Grad.

Ein Endabschnitt der Kronenradwelle 118 steht an einer Abtriebsseite 119 ebenfalls über das Getriebegehäuse 106 über und greift durch einen mit dem Getriebegehäuse 106 verschraubten, in der Darstellung gemäß Fig. 1 dem Betrachter zugewandten Kronenradwellenverschlussdeckel 121 durch. Auf der in der Darstellung gemäß Fig. 1 dem Betrachter abgewandten Unterseite ist ein weiterer Kronenradverschlussdeckel 124 vorhanden, der ebenfalls mit dem Getriebegehäuse 106 verschraubt ist und in den der andere Endabschnitt der Kronenradwelle 118 eingreift.

In Eckbereichen ist das Getriebegehäuse 106 zum Verbinden mit in Fig. 1 nicht dargestellten Montagekomponenten, das Servogetriebe 103 insbesondere über die Stirnritzelwelle 112 antreibenden Komponenten wie einem Servoantriebsmotor zum Ausbilden einer Servostelleinheit und von dem Servogetriebe 103 angetriebenen Komponenten wie beispielsweise Roboterarme zweckmäßigerweise mit Anbauausnehmungen 127 ausgestattet, die in Zungenvorsprüngen 130 des Getriebegehäuses 106 ausgebildet sind.

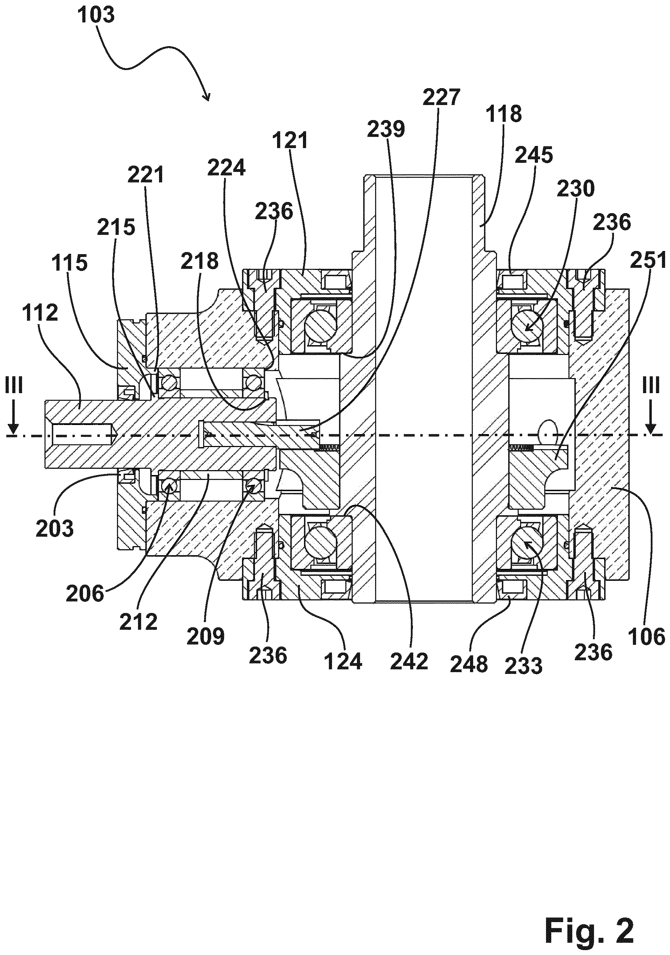

Fig. 2 zeigt in einer Schnittansicht das Ausführungsbeispiel gemäß Fig. 1 mit der Schnittebene in der Mittenebene, in der die Achsen der Stirnritzelwelle 112 und der Kronenradwelle 118 liegen.

Aus Fig. 2 ist ersichtlich, dass die Stirnritzelwelle 112 im Durchtrittsbereich durch den Stirnritzelwellenverschlussdeckel 115 mit einer Ringdichtung 203 abgedichtet ist, die in einer in dem Stirnritzelwellenverschlussdeckel 115 eingebrachten Ringnut angeordnet ist. Die Stirnritzelwelle 112 ist in dem Getriebegehäuse 106 über zwei beispielsweise als Rillenkugellager ausgeführte Kugellagerringe 206, 209 als ein Satz von Kugellagern gelagert, wobei zwischen den Kugellagerringen 206, 209 ein Lagerdistanzring 212 angeordnet ist. Die Kugellagerringe 206, 209 sind außenseitig durch eine im Bereich des Stirnritzelwellenverschlussdeckels 115 an der Stirnritzelwelle 112 ausgebildete, nach radial außen überstehende Radialwand 215 und einen Sprengring 218, der im Bereich des in dem Getriebegehäuse 106 angeordneten Endes der Stirnritzelwelle 112 in einer in der Stirnritzelwelle 112 ausgebildeten Sprengringnut angeordnet ist, zusammen mit einer an dem Stirnritzelwellenverschlussdeckel 115 ausgebildeten weiteren Radialwand 221 sowie einer innenseitig an dem Getriebegehäuse 106 ausgebildeten Radialstufe 224 gegen axiales Verschieben gesichert.

An die Qualität der Kugellagerringe 206, 209 müssen dabei keine besonderen Anforderungen gestellt werden, da, wie weiter unten näher erläutert, auf die Stirnritzelwelle 112 keine wesentlichen axialen Kräfte einwirken, die von den Kugellagerringen 206, 209 aufgenommen werden müssten.

Es versteht sich, dass grundsätzlich anstatt Kugellager auch andere Arten von Lager wie beispielsweise Wälzlager, und darunter insbesondere Nadellager, Verwendung finden können.

An dem in dem Getriebegehäuse 106 angeordneten Ende der Stirnritzelwelle 112 ist drehfest ein Stirnritzel 227 eines Kronenradgetriebes eingezapft.

Aus Fig. 2 ist weiterhin ersichtlich, dass die Kronenradwelle 118 mittels zweier mit zwei Halbschalen sowie mit zwischen den Halbschalen angeordneten Lagerkugeln ausgebildete Axialkugellager 230, 233 als beispielhaftem weiteren Satz von Kugellagern gelagert ist, die außenseitig durch die mittels Befestigungsschrauben 236 mit dem Getriebegehäuse 106 verschraubten Kronenradwellenverschlussdeckel 121, 124 und innenseitig durch an der Kronenradwelle 118 ausgebildete Radialstufen 239, 242 fixiert sind. Die Axialkugellager 230, 233 sind zum Aufnehmen von im Wesentlichen nur axial wirkenden Kräften eingerichtet. Die Kronenradwelle 118 ist durch Ringdichtungen 245, 248 nach außen abgedichtet, die in in den Kronenradwellenverschlussdeckeln 121, 124 eingebrachten Ringnuten angeordnet sind. Die Kronenradwelle 118 steht drehfest mit einem mit dem Stirnritzel 227 kämmenden Kronenrad 251 des Kronenradgetriebes in Verbindung, wobei das Kronenrad 251 zwischen dem Stirnritzel 227 sowie einem Axialkugellager 233 angeordnet ist und sich auf der dem Stirnritzel 227 abgewandten Seite an einer radial über die Kronenradwelle 118 überstehenden Widerlagerwand 254 abstützt. Dadurch ist das Kronenrad 251 in axialer Richtung spielfrei fixiert.

Durch die relativ geringen inneren Kräfte und damit inhärente relative Torsionsfreiheit des Kronenradgetriebes lässt sich das Getriebegehäuse 106 bevorzugt aus Aluminium oder einer Aluminiumlegierung als Leichtmetallwerkstoff herstellen, was zu einem relativ geringen Leistungsgewicht führt und insbesondere für hochdynamische Anwendungen aufgrund der dadurch verhältnismäßig geringen zu beschleunigenden Masse vorteilhaft ist.

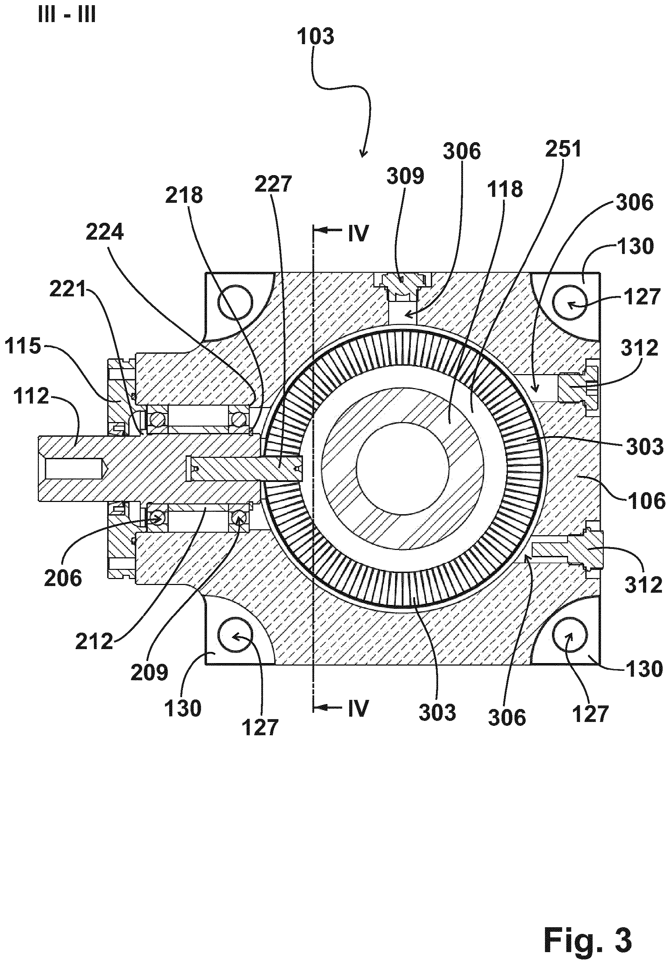

Fig. 3 zeigt in einer Schnittansicht das Ausführungsbeispiel gemäß Fig. 1 mit einer Schnittebene III-III rechtwinklig zu der Schnittebene gemäß Fig. 2, wobei die Schnittebene gemäß Fig. 3 in der Ebene der Achse der Stirnritzelwelle 112 und parallel zu dem Kronenrad 251 liegt. Aus Fig. 3 ist ersichtlich, dass das Kronenrad 251 auf seiner dem Stirnritzel 227 zugewandten Seite über eine Anzahl von Kronenradzähnen 303 verfügt, wobei die Kronenradzähne 303, wie weiter unten näher erläutert, vorzugsweise ballig ausgebildet sind. Aus Fig. 3 ist besonders gut ersichtlich, dass das durch das einen verhältnismäßig kleinen äußeren Umfang aufweisende Stirnritzel 227 und das einen verhältnismäßig großen stirnseitigen Umfang aufweisende Kronenrad 251 gebildete Kronenradgetriebe ein verhältnismäßig großes Übersetzungsverhältnis von beispielsweise etwa 15 bis etwa 40 bei Betrieb der Stirnritzelwelle 112 als Antriebswelle aufweist.

Weiterhin lässt sich Darstellung gemäß Fig. 3 entnehmen, dass in dem Getriebegehäuse 106 eine Anzahl von Wartungsausnehmungen 306 vorhanden sind, die beispielsweise Schmierungszwecken dienen und die mit Verschlussstopfen 309 sowie beispielsweise als Schmiernippel ausgebildeten Verschlussschrauben 312 verschließbar sind.

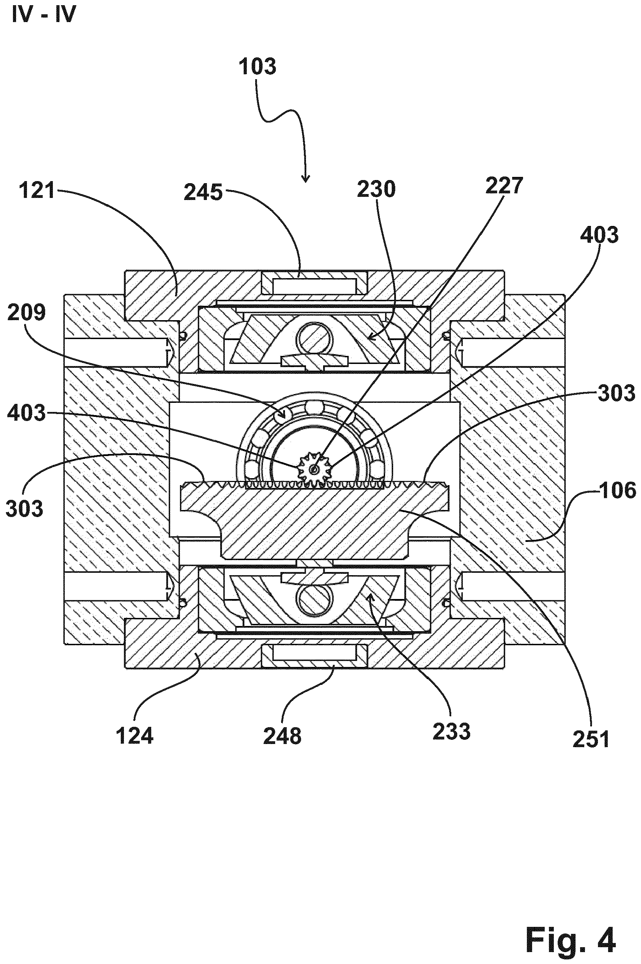

Fig. 4 zeigt in einer Schnittansicht das Ausführungsbeispiel gemäß Fig. 1 mit der Schnittebene IV-IV rechtwinklig zu der Schnittebene gemäß Fig. 2 und zu der Schnittebene III-III gemäß Fig. 3, wobei die Schnittebene IV-IV gemäß Fig. 4 zwischen dem freien Ende des Stirnritzels 227 und der Kronenradwelle 118 liegt. Aus Fig. 4 ist ersichtlich, dass das Stirnritzel 227 über eine Anzahl von nach radial außen ausgerichteten Stirnritzelzähnen 403 verfügt, die bei Drehen des Stirnritzels 227 kämmend mit den Kronenradzähnen 303 in Eingriff sind und bei Betrieb der Stirnritzelwelle 112 als Antriebswelle die dann als Abtriebswelle arbeitende Kronenradwelle 118 in Drehung versetzt.

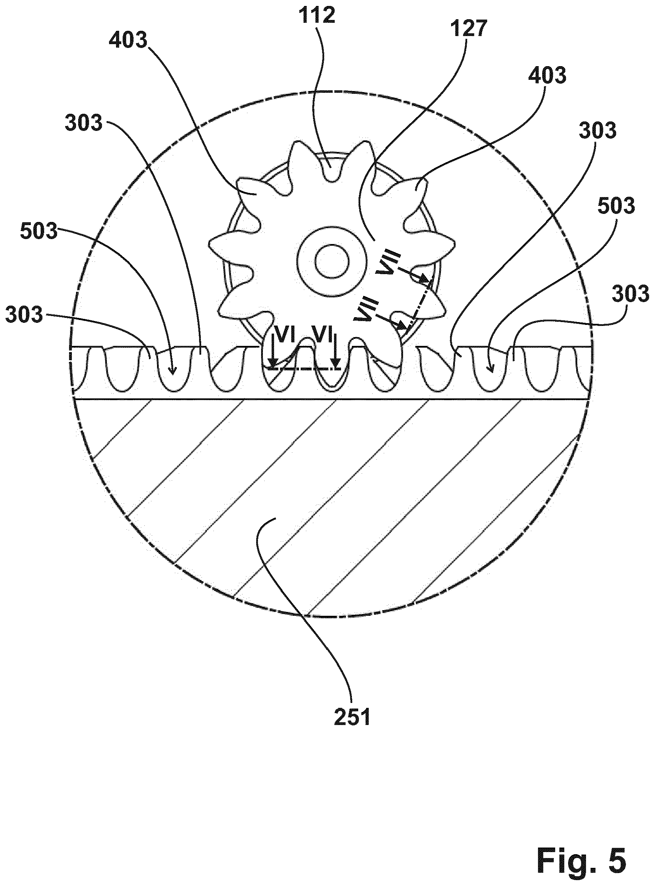

Fig. 5 zeigt in einer Schnittansicht durch das Kronenrad 251 rechtwinklig zu der Achse der Stirnritzelwelle 112 in einer gegenüber der Darstellung gemäß Fig. 4 vergrößerten Detailansicht den kämmenden Eingriff der Stirnritzelzähne 403 des Stirnritzels 227 mit den Kronenradzähnen 303 des Kronenrads 251. Aus Fig. 5 ist ersichtlich, dass jeder Stirnritzelzahn 403 auf seiner radial innen liegenden Fußseite eine verhältnismäßig breite, sockelartige Struktur aufweist und ab etwa der Hälfte der Zahnhöhe mit abgerundeten Flanken zu einem endseitig abgeflachten Zahnkopf zuläuft.

Die zwischen den Kronenradzähnen 303 ausgebildeten Kronenradnuten 503 erstrecken sich in radialer Richtung und weisen, wie weiter unten näher erläutert, aufgrund der entsprechenden Gestaltung der Kronenradzähne 303 einen zu der Form der Stirnritzelzähne 403 komplementär ausgebildete Aufnahmeräume 503 auf, so dass der kämmende Eingriff der Kronenradzähne 303 und Stirnritzelzähne 403 nur nach Einstellen des Flankenspiels weitestgehend spielfrei ist. Dadurch ist auch erkennbar, dass das Kronenradgetriebes relativ einfachen kostengünstig herzustellen ist. Insbesondere lassen sich das Stirnritzel 227 und das Kronenrad 251 einzeln fertigen und müssen nicht satzweise hergestellt werden.

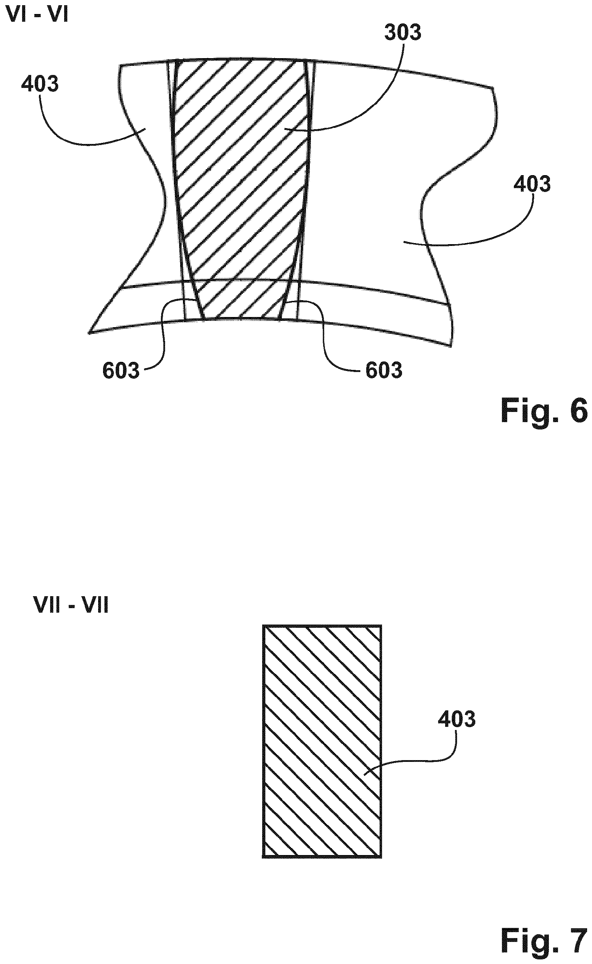

Fig. 6 zeigt in einer Schnittansicht in der in etwa in der Mitte der Höhe der Kronenradzähne 303 liegenden Ebene VI-VI gemäß Fig. 5 in einer nicht maßstabsgerechten Darstellung einen Querschnitt eines Kronenradzahns 303. Aus Fig. 6 ist ersichtlich, dass die sich in radialer Richtung erstreckenden Seitenflanken 603 des Kronenradzahns 303 in Umfangsrichtung, in Fig. 6 übertrieben dargestellt, konvex gewölbt vorstehen und dadurch dem Kronenradzahns 303 an seinen beiden Flanken 603 eine ballige Gestalt verleihen. In der Ebene VI-VI liegt dabei die maximale Erhebung sowohl in radialer Richtung mit einer Längsballigkeit und in einer Richtung rechtwinklig zu dem Kronenrad 251 mit einer Höhenballigkeit vor. Dabei ist der erhabenste Bereich der Längsballigkeit gegenüber der Mitte der Kronenradzähne 303 gegenüber dem Mittenbereich etwas nach radial außen versetzt. Aufgrund dieser in zwei Richtungen, in diesem Sinne also doppelt, balligen Gestalt der Flanken 603 ergibt sich ein verhältnismäßig geräuscharmer und weitestgehend spielfreier Betrieb des Kronenradgetriebes mit einem aufgrund von im Wesentlichen nicht vorhandenen axialen Kräften verhältnismäßig hohen Wirkungsgrad insbesondere bei einer mit beispielsweise bis zu 8.000 Umdrehungen pro Minute schnell drehenden Stirnritzelwelle 112 als Antriebswelle.

Diese ballige Gestalt ist das Ergebnis eines Herstellungsverfahrens, bei dem das Kronenrad 251 zuerst gehärtet und die Kronenradzähne 303 nach dem Härten, insbesondere Einsatzhärten, beispielsweise wie in dem Artikel "Kronenräder mit Standardwerkzeugen herstellen" von Hermann J. Stadtfeld, erschienen in WB 12/2010, Carl Hanser Verlag München, 2010, beschrieben, geschliffen worden sind.

Vereinfacht dargestellt, kann die Kinematik des Wälzschleifprozesse als Schraubwälzgetriebe verstanden werden, das mit zusätzlichen Achsbewegungen versehen ist, wie einer X-Zustellung, welche die Zustelltiefe einer Schleifschnecke im Schleifprozess regelt, und einer vertikalen Vorschubbewegung Z, die die Materialabtragsleistung bestimmt. Hinzu kommt eine seitliche Bewegung Y, das sogenannte Shiften, das sicherstellt, dass niemals auf der gleichen Stelle der Schleifschnecke geschliffen wird und nur frische, schnittige Schleifkörner den Materialabtrag, die Oberflächengüte und die Profilhaltigkeit bestimmen.

Beim Wälzschleifen wird als Werkzeug eine Schleifscheibe mit Evolventenprofil verwendet. Die Evolventenform wird durch Wälzen von Schleifscheibe und Verzahnung erzeugt. Dieses Verfahren weist die Vorteile hohe Rundlauf- und Teilungsgenauigkeit, konstante Evolventenform und Flankenlinie am ganzen Umfang der Verzahnung, universelle Werkzeuge und lange Werkzeugstandzeit, sehr gute Oberflächenrauheit auf.

Die Schleifscheibe hat das gleiche Evolventenprofil wie Gegenstück des Kronenrades 251. Mit der Schleifscheibe wird eine Lücke komplett und anschließend die nächste Lücke geschliffen. Dieses Verfahren heißt Einzelteilverfahren. Über die Zahnbreite pendelt die Schleifscheibe, und nach jeder Pendelbewegung werden das Werkstück und das Werkzeug über die Drehachse positioniert.

Fig. 7 zeigt in einer Schnittansicht in der Ebene VII-VII gemäß Fig. 3 einen Querschnitt eines Stirnritzelzahns 403. Aus Fig. 7 ist ersichtlich, dass die Stirnritzelzähne 403 aufgrund des über die gesamte Höhe rechteckigen Querschnitts verhältnismäßig wenig aufwändig zu fertigen sind.

Aufgrund dieser Kronenradgeometrie ergibt sich ein weitestgehend temperaturunabhängiges und lastunabhängiges Verdrehspiel.

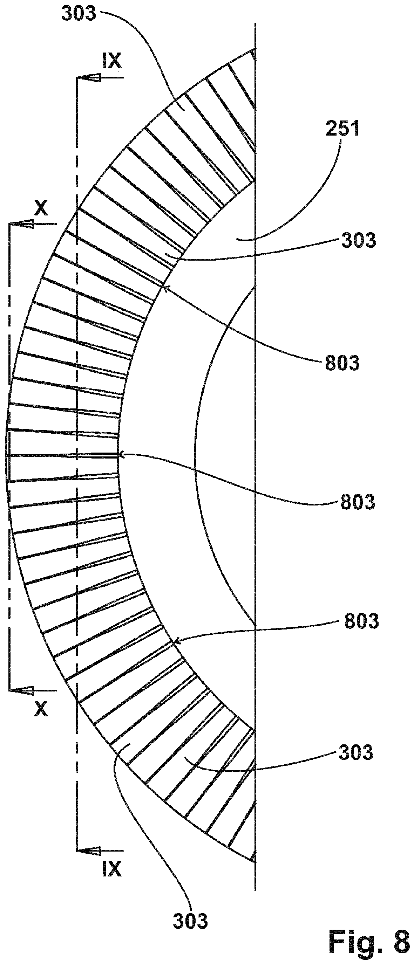

Fig. 8 zeigt in einer ausschnittsweisen Draufsicht ein Kronenrad 251 gemäß einem Ausführungsbeispiel der Erfindung. Aus der Darstellung gemäß Fig. 8 lässt sich deutlich erkennen, dass sich die Kronenradzähne 303 von radial außen nach radial innen in Umfangsrichtung kontinuierlich verjüngen, so dass zwischen benachbarten Kronenradzähnen 303 ein sich von radial außen nach radial innen verbreitender Zahngrund 803 ausgebildet ist.

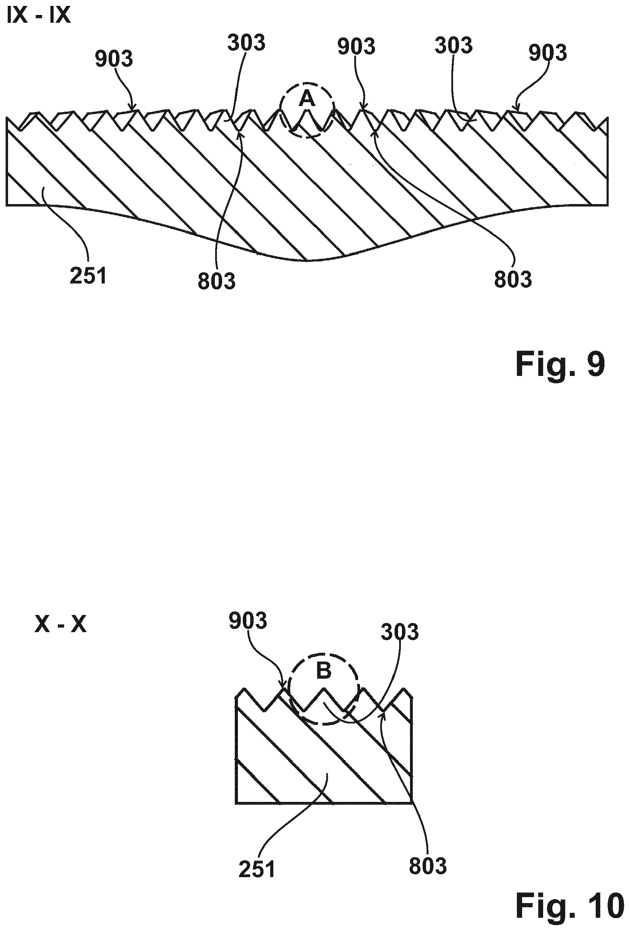

Fig. 9 zeigt in einer Schnittansicht das Kronenrad 251 in dem Ausführungsbeispiel gemäß Fig. 8 in der Schnittebene IX-IX, die nach Art einer Sekante, die in dieser Schnittebene mittig liegenden Kronenradzähne 303 gegenüber der Mitte in radialer Richtung etwas nach radial innen versetzt anschneidet. Aus Fig. 9 lassen sich die nach radial innen breiter werdenden Zahngründe 803 und Zahnköpfe 903 erkennen.

Fig. 10 zeigt in einer Schnittansicht entlang einer Schnittebene X-X das Kronenrad 251 in dem Ausführungsbeispiel gemäß Fig. 8, wobei die Schnittebene X-X gegenüber der Schnittebene IX-IX parallel nach radial außen versetzt ist und nur noch verhältnismäßig wenige Kronenradzähne 303 anschneidet. Aus. Fig. 10 lässt sich erkennen, dass die Kronenradzähne 303 im radial außen liegenden Bereich verhältnismäßig scharfkantig ausgebildete Zahnköpfe 903 aufweisen.

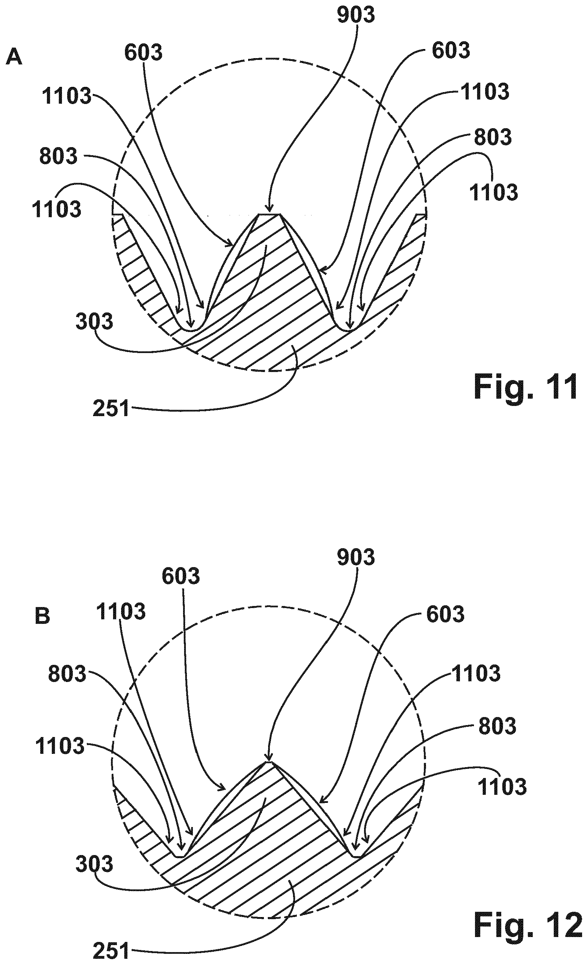

Fig. 11 zeigt in einer vergrößerten Schnittansicht den Bereich A in der Darstellung gemäß Fig. 9, der in etwa in der Mitte der Schnittebene IX-IX liegt. Der Darstellung gemäß Fig. 11 lässt sich entnehmen, dass die Kronenradzähne 303 im Mittenbereich jeweils einen deutlich abgeflachten Zahnkopf 903 aufweisen, während der Zahngrund 803 im Übergang zwischen Zahnfüßen 1103 in diesem Bereich verhältnismäßig breit und abgerundet ausgebildet ist. Des Weiteren lässt sich der Darstellung gemäß Fig. 11 entnehmen, dass die in diesem Bereich relativ steilen Seitenflanken 603 der Kronenradzähne 303 in Höhenrichtig konvex gewölbt sind und somit eine Höhenballigkeit aufweisen

Fig. 12 zeigt in einer vergrößerten Schnittansicht den Bereich B in der Darstellung gemäß Fig. 10. Aus Fig. 12 lässt sich entnehmen, dass in der Schnittebene X-X die Höhe der Kronenradzähne 303 gegenüber dem Mittenbereich gemäß Fig. 10 und umso mehr gegenüber dem radial innen liegenden Endbereich, genommen als Abstand zwischen dem jeweiligen Zahngrund 803 und den Zahnköpfen 903, geringer ist und die balligen Seitenflanken 603 weniger steil als im Mittenbereich verlaufen. Im radial innenliegenden Endbereich sind die Seitenflanken 603 am steilsten ausgerichtet.

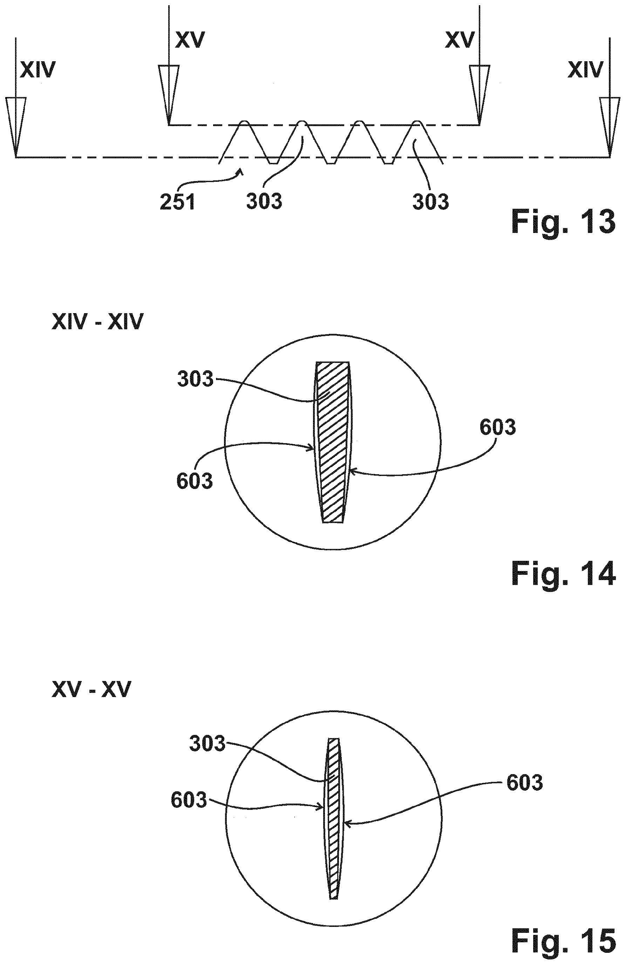

Fig. 13 zeigt in einer Stirnansicht eine Anzahl von Kronenradzähnen 303 mit einer eingezeichneten, im Fußbereich liegenden Schnittebene XIV-XIV und einer eingezeichneten, in einem Kopfbereich liegende Schnittebene XV-XV.

Fig. 14 zeigt eine Schnittansicht eines Kronenradzahns 303 in der Schnittebene XIV-XIV gemäß Fig. 13. Aus der Darstellung gemäß Fig. 14 lässt sich entnehmen, dass die Kronenradzähne 303 auch in radialer Richtung des Kronenrads 251, und in der Darstellung gemäß Fig. 14 in Längsrichtung, eine konvex nach außen gewölbte Gestalt und somit eine Längsballigkeit aufweisen. Aus der Darstellung gemäß Fig. 14 lässt sich erkennen, dass der erhabenste Bereich der Längsballigkeit gegenüber der Mitte der Kronenradzähne 303 im Fußbereich etwas nach radial außen versetzt ist.

Fig. 15 zeigt einen Kronenradzahn 303 in einer Schnittansicht in der Ebene XV-XV gemäß Fig. 3. Aus der Darstellung gemäß Fig. 15 lässt sich entnehmen, dass sich die Längsballigkeit bis in den Zahnkopf 903 fortsetzt. Aus der Darstellung gemäß Fig. 15 lässt sich ebenfalls erkennen, dass der erhabenste Bereich der Längsballigkeit im oberen Bereich gegenüber dem unteren Bereich in Längsrichtung etwas näher zu der Mitte der Kronenradzähne 303 liegt und somit schräg verläuft.

Durch diese doppelte Balligkeit, nämlich einer Längsballigkeit und einer Höhenballigkeit, mit einer Linie der maximalen Erhebung oberhalb der mittleren Zahnhöhe sowie vom Zahnfuß 1103 in Richtung des Zahnkopfes 903 schräg von radial außen nach radial innen verlaufend ergibt sich in Verbindung mit dem rechteckigen Querschnitt der Stirnritzelzähne 403, dass die Stirnritzelwelle 112 in axialer Richtung kräftefrei ist, dass das Servogetriebe 103 unempfindlich gegen Lastspitzen ist und dass eine einfache Lagerung mit lediglich zwei Paaren von Kugellagern geschaffen ist. Dies führt auch aufgrund geringer Lagerreibung unter Last zu einem sehr hohen Wirkungsgrad über einen großen Drehzahlbereich bei einer einstufigen Verzahnung sowie hohen Übersetzung. Das Servogetriebe 103 gemäß dem erläuterten Ausführungsbeispiel der Erfindung zeichnet sich weiterhin durch einen definierten Amplitudengang und Phasengang aus, wobei der Amplitudengang und der Phasengang für eine spezifische Veränderung veränderlich und anpassbar ist. Zudem zeigt sich eine äußerst geringe eigene Hysterese sowie eine äußerst geringe Eigendämpfung auch bei einer hohen Übersetzung.

## Patentansprüche

1. Servogetriebe mit einer Antriebswelle (112), mit einem Antriebsrad (227), das drehfest mit der Antriebswelle (112) verbunden ist, mit einer Abtriebswelle (118), mit einem Abtriebsrad (251), das drehfest mit der Abtriebswelle (118) verbunden ist, wobei das Antriebsrad (227) sowie das Abtriebsrad (251) kämmend miteinander in Eingriff sind und wobei die Antriebswelle (112) sowie die Abtriebswelle (118) winklig zueinander ausgerichtet sind, **dadurch gekennzeichnet, dass** das Antriebsrad und das Abtriebsrad ein Kronenradgetriebe mit einem Stirnritzel (227) und mit einem Kronenrad (251) bilden.

2. Servogetriebe nach Anspruch 1, **dadurch gekennzeichnet, dass** das Antriebsrad als Stirnritzel (227) mit Stirnritzelzähnen (403), die einem rechteckigen Querschnitt aufweisen, und das Abtriebsrad als Kronenrad (251) mit Kronenradzähnen (303), die ballig ausgebildete Seitenflanken (603) aufweisen, ausgebildet sind.

3. Servogetriebe nach Anspruch 2, **dadurch gekennzeichnet, dass** die Seitenflanken (603) der Kronenradzähne (303) des Kronenrads (251) in zwei Richtungen ballig ausgebildet sind.

4. Servogetriebe nach Anspruch 3, **dadurch gekennzeichnet, dass** die maximalen Erhebungen der Seitenflanken (603) gegenüber einem Mittenbereich in radialer Richtung nach radial innen versetzt sind.

5. Servogetriebe nach Anspruch 4, **dadurch gekennzeichnet, dass** die Linie der maximalen Erhebung der Seitenflanken (603) in Höhenrichtung schräg verläuft.

6. Servogetriebe nach einem der Ansprüche 3 bis 5, **dadurch gekennzeichnet, dass** das Kronenradgetriebe ein Winkelgetriebe mit einem Getriebewinkel von mehr als 30 Grad bis etwa 150 Grad ist.

7. Servogetriebe nach Anspruch 6, **dadurch gekennzeichnet, dass** der Getriebewinkel 90 Grad ist.

8. Servogetriebe nach einem der Ansprüche 1 bis 7, **dadurch gekennzeichnet, dass** die Antriebswelle (112) und die Abtriebswelle (118) jeweils mit einem Satz von zwei Kugellagern (206, 209; 230, 233) gelagert sind.

9. Servogetriebe nach Anspruch 8, **dadurch gekennzeichnet, dass** das Kronenrad (251) zwischen zwei Kugellagern (230, 233) angeordnet ist.

10. Servogetriebe nach einem der Ansprüche 1 bis 9, **dadurch gekennzeichnet, dass** das Kronenradgetriebe in einem Getriebegehäuse (106) aus einem Leichtmetallwerkstoff eingebaut ist.

11. Servogetriebe nach Anspruch 10, **dadurch gekennzeichnet, dass** der Leichtmetallwerkstoff Aluminium oder eine Aluminiumlegierung ist.

12. Servostelleinheit mit einem Servogetriebe (103) nach einem der Ansprüche 1 bis 11 und mit einem Servoantriebsmotor, der mit der Antriebswelle (112) verbunden ist.

13. Verfahren zum Herstellen eines Servogetriebes (103) nach einem der Ansprüche 1 bis 12 mit Bereitstellen eines Kronenradgetriebes mit einem Stirnritzel (227) und mit einem Kronenrad (251), wobei das Kronenrad (251) für das Bereitstellen des Kronenradgetriebes zuerst gehärtet und nach dem Härten die Kronenradzähne (303) des Kronenrads (251) geschliffen worden sind.
